# EUROPÄISCHE PATENTSCHRIFT

(11) **EP 2 498 972 B1**
(45) Veröffentlichungstag und Bekanntmachung des Hinweises auf die Patenterteilung: **18.12.2013**
(21) Anmeldenummer: 10782222.3
(22) Anmeldetag: 09.11.2010
(51) Int. Cl.: B29C 49/54

(54) **BLASFORMWERKZEUG**
BLOW MOLDING TOOL
MOULE DE SOUFFLAGE

(30) Priorität: 09.11.2009 DE 102009052278
(43) Veröffentlichungstag der Anmeldung: 19.09.2012
(73) Patentinhaber: FHW-Moulds GmbH, 46242 Bottrop (DE)
(72) Erfinder: SCHAUB, Josef, 45964 Gladbeck (DE)
(74) Vertreter: von dem Borne, Andreas
(86) Internationale Anmeldenummer: PCT/EP2010/067136
(87) Internationale Veröffentlichungsnummer: WO 2011/054969

(56) Entgegenhaltungen:
- EP-A2- 0 306 923
- US-A- 3 753 641
- US-A- 3 905 740
- US-A- 5 750 067
- DATABASE WPI Week 199344 Thomson Scientific, London, GB; AN 1993-348098 XP002632194, -& JP 5 254531 A (DAINIPPON PRINTING CO LTD) 5. Oktober 1993 (1993-10-05)

## Beschreibung

Die Erfindung betrifft ein Blasformwerkzeug für die Herstellung von Hohlkörpern im Wege der Blasformgebung, insbesondere für die Herstellung von Behältern mit nach innen gewölbtem Behälterboden, mit zumindest zwei Werkzeughälften, welche zum Öffnen und Schließen des Werkzeuges in einer ersten Richtung, z.B. in horizontaler Richtung gegeneinander verfahrbar sind, wobei an eine, mehrere oder jede Werkzeughälfte jeweils eine gegenüber der jeweiligen Werkzeughälfte in zumindest einer zweiten Richtung, z.B. vertikalen Richtung, bewegbare Bodenhälfte und/oder Schulterhälfte angeschlossen ist. - Hohlkörper meint im Rahmen der Erfindung insbesondere einen Behälter. Bei einem Behälter kann es sich z.B. um einen Kanister, eine Flasche oder dergleichen handeln, welche in der Regel eine Einfüllöffnung und/oder einen Griff aufweist.

Im Zuge der Herstellung derartiger Hohlkörper durch Blasformgebung erzeugt z.B. ein Extruder mit einem Blaskopf einen schlauchförmigen Vorformling, der dann in noch heißem Zustand von einem Formwerkzeug bzw. Blasformwerkzeug umschlossen und durch mittels eines Blasdorns eingebrachter Druckluft aufgeweitet wird, so dass der betreffende Hohlkörper die Innenkontur des Blaswerkzeuges bzw. des Formwerkzeuges erhält. Dazu sind die Werkzeughälften in der Regel in horizontaler Richtung gegeneinander verfahrbar, um das Werkzeug zu öffnen und zu schließen.

In der Praxis besteht aus verschiedensten Gründen das Bedürfnis, Hohlkörper und insbesondere Behälter, wie z.B. Kanister oder Flaschen mit einem nach innen gewölbten Behälterboden herzustellen. Dabei bereitet das Entformen derartiger Hohlkörper mit nach innen gewölbtem Behälterboden in der Praxis häufig Schwierigkeiten. Aus diesem Grunde wurde vorgeschlagen, an die Werkzeughälften absenkbare Bodenhälften anzuschließen. Dazu wurden die Bodenhälften separat über Hydraulikzylinder abgesenkt und angehoben. Damit wird zwar das Problem des Entformens gelöst, die bekannten Anordnungen sind jedoch konstruktiv und steuerungstechnisch verhältnismäßig aufwendig. Es ist insbesondere erforderlich auch im geschlossenen Zustand hinreichende Zuhaltekräfte zu erzeugen.

Ähnliche Probleme ergeben sich in der Praxis im Zusammenhang mit der Herstellung der Schulterbereiche des Behälters. Die oberen Bereiche bzw. Schulterbereiche weisen in der Regel eine komplizierte Struktur mit Einfüllöffnung und/oder Griff auf, so dass das Entformen ebenfalls Probleme bereiten kann. Siehe dazu US 5750067.

Aus der US 3 861 845 kennt man ein Werkzeug für die Blasformgebung, bei welcher unterseitig an die beiden Werkzeughälften im Bodenbereich Einsätze schwenkbar angelenkt sind. Im Zuge des Öffnens der Werkzeughälften werden die Einsätze im Wege einer Schwenkbewegung abgesenkt.

Ähnliches gilt für eine aus der US 3 621 525 bekanntes Blasformwerkzeug, bei dem Teile des Bodens schwenkbar an die Werkzeughälften angelenkt sind. Die Bodenteile senken sich im Zuge des Öffnens automatisch durch die Schwerkraft im Sinne einer Schwenkbewegung ab. Im Zuge des Schließens werden die Bodenteile zurückgeschwenkt. Dazu arbeiten entsprechende Betätigungsvorsprünge auf die Schwenkhebel der Bodenteile.

Eine Blasformvorrichtung, bei welcher die Bodenhälften unabhängig von den Werkzeughälften über Hydraulikzylinder abgesenkt werden, ist beispielsweise aus der US 3 753 641 bekannt.

Schließlich kennt man aus der DE 1 454 916 A1 ein Blasformwerkzeug, dass aus einem nach beiden Seiten hin offenen Mittelteil und zwei das Mittelteil verschließenden Bodenteilen besteht. Die Bodenteile sind neben der ohnehin bekannten Teilung noch weiter geteilt, und zwar ist jede Hälfte durch eine weitere Teilfläche geteilt. Beim Öffnen der Form werden zuerst die äußeren Teile entfernt, so dass die inneren Teile noch am Fassboden sitzenbleiben. Zwischen diesen beiden Mitteilteilen sind Federn angeordnet, die nach Entfernen der Außenteile die Mittelteile der Form auseinanderdrücken. Darüber hinaus sind aber auch die Inneren Teile längs ihrer Teilflächen geführt.

Der Erfindung liegt die Aufgabe zugrunde, ein Blasformwerkzeug für die Herstellung von Hohlkörpern im Wege der Blasformgebung, insbesondere für die Herstellung von Behältern mit nach innen gewölbtem Behälterboden, zu schaffen, welches einfach und kostengünstig aufgebaut ist und dennoch ein einwandfreies Entformen des Hohlkörpers ermöglicht.

Zur Lösung dieser Aufgabe lehrt die Erfindung bei einem gattungsgemäßen Blasformwerkzeug der eingangs beschriebenen Art nach einem ersten Aspekt, dass die Bodenhälfte mittels einer oder mehreren schräg unter einem vorgegebenen Winkel zur der ersten Richtung angeordneten Linearführungen gekoppelt ist. Dabei kann die Bodenhälfte mittels einer oder mehreren Linearführungen derart mit der Werkzeughälfte gekoppelt sein, dass die Bodenhälfte im Zuge des Verfahrens der Werkzeughälfte entlang einer unter einem vorgegebenen Winkel schräg zu der ersten Richtung, z.B. zur Horizontalen, angeordneten Führungsbahn verschoben und dabei um ein vorgegebenes (Absenk-)Maß in einer zweiten Richtung verfahren wird, z.B. in vertikaler Richtung abgesenkt wird.

Die Erfindung geht dabei von der Erkenntnis aus, dass die Eingangs beschriebenen Nachteile vermieden werden können, wenn eine "Zwangskopplung" zwischen Werkzeughälften und Bodenhälften über schräge Linearführungen realisiert wird. Diese können z. B. die ohnehin durchzuführende Öffnungsbewegung der Werkzeughälften zugleich in eine Absenkbewegung der Bodenhälften umsetzen. Diese Maßnahmen ermöglichen es z. B., dass die Bodenhälften im Zuge des Öffnens der Werkzeughälften selbsttätig und folglich ohne weitere Antriebe abgesenkt werden. Im Zuge des Schließens der Form werden die Bodenhälften dann wiederum selbsttätig angehoben, so dass die Form vollständig geschlossen wird. Die schrägen Linearführungen bewirken folglich im Zuge des Öffnens und Schließens der Form eine Kraftumlenkung und damit auch Kraftübertragung an die Bodenhälften. Diese kann z. B. - wie beschrieben - für ein selbsttätiges Absenken und Anheben des Bodens ohne weitere Antriebe ausgenutzt werden. Die schrägen Linearführungen sind aber auch unter einem anderen Aspekt vorteilhaft. So wird über die Zwangskopplung eine besonders wirksame Zuhaltung auf der Bodenhälfte über die Zuhaltekräfte der Werkzeughälften und folglich der Blasformmaschine gewährleistet. Denn vorzugsweise ist die Bodenhälfte mittels einer oder mehreren Linearführungen derart mit der Werkzeughälfte gekoppelt, dass eine Zuhaltung der Werkzeughälfte bzw. der Werkzeughälften in der ersten Richtung zugleich eine Zuhaltung der Bodenhälfte bzw. Bodenhälften entlang der zweiten Richtung bewirkt. Dieses ist insbesondere deshalb vorteilhaft, weil im Zuge der Blasformgebung nicht nur erhebliche Kräfte auf die Werkzeughälften, sondern selbstverständlich auch auf die Bodenhälften wirken. Es ist nun aufgrund der Zwangskopplung über die Linearführungen grundsätzlich nicht erforderlich, für eine separate Zuhaltung der Bodenhälften zu sorgen, da diese Zuhaltung letztlich bereits von der Zuhaltung der Werkzeughälften und folglich der Zuhaltung der Maschine selbst aufgebracht wird. Die schrägen Linearführungen und die dadurch realisierte Zwangskopplung mit Kraftumlenkung ist folglich auch dann vorteilhaft, wenn nicht zwingend ein selbsttätiges Anheben und Absenken der Bodenhälften erfolgen soll, sondern wenn zusätzliche Antriebe für die Bodenhälften vorgesehen sind. Besonders bevorzugt ist die Kopplung zwar so realisiert, dass die Bodenhälfte im Zuge des Öffnens der Werkzeughälfte ohne weitere Antriebe selbsttätig abgesenkt wird. Die Erfindung umfasst aber auch Ausführungsformen, bei denen zusätzliche Antriebe, z. B. Zylinderantriebe, besonders bevorzugt Pneumatikzylinder, vorgesehen sind.

Die Schrägführung lässt sich konstruktiv beispielsweise dadurch realisieren, dass die Bodenhälfte fest mit zumindest einem Führungselement und die Werkzeughälfte fest mit zumindest einem Führungsgegenelement verbunden sind. Dabei kann die Bodenhälfte fest mit zumindest einer schräg angeordneten Führungsschiene und die Werkzeughälfte fest mit zumindest einem auf der Führungsschiene geführten Führungsschlitten verbunden sein. In diesem Fall bildet die Führungsschiene das Führungselement und der Führungsschlitten das Führungsgegenelement. Es kann jedoch auch umgekehrt der Führungsschlitten mit der Bodenhälfte und die Führungsschiene mit der Werkzeughälfte verbunden sein. Dabei können als Linearführungen sowohl Linearwälzführungen als auch Lineargleitführungen zum Einsatz kommen.

Der Einsatz der Schrägführung hat im Übrigen den Vorteil, dass auf Gelenke bzw. eine schwenkbare Anlenkung von Bodenteilen verzichtet werden kann, denn solche Gelenke können grundsätzlich Schwachstellen bilden. Die Anordnung zeichnet sich durch einen kompakten Aufbau aus, so dass lediglich geringer Bauraum benötigt werden. Die Entfernung von Abfallteilen, z. B. Griffabfall, Schulterabfall und/oder Bodenabfall, wird ebenfalls erleichtert, weil auch die Bodenhälften auseinander fahren. Schließlich ermöglichen die erfindungsgemäßen Maßnahmen nach wie vor eine einwandfreie Kühlung der Komponenten.

Die insgesamt beschriebenen Vorteile werden im Rahmen der Erfindung nach einem zweiten Aspekt auch für den Schulterbereich erreicht. So lehrt die Erfindung nach einem zweiten Aspekt, dass die Schulterhälfte mittels einer oder mehreren schräg unter einem vorgegebenen Winkel zu der ersten Richtung angeordneten Linearführungen mit der Werkzeughälfte gekoppelt ist. Dabei kann die Schulterhälfte mittels einer oder mehreren Linearführungen derart mit der Werkzeughälfte gekoppelt sein, dass die Schulterhälfte im Zuge des Verfahrens der Werkzeughälfte entlang einer unter einem vorgegebenen Winkel schräg zu der ersten Richtung, z. B. zur horizontalen, angeordneten Führungsbahn verschoben und um ein vorgegebenes Maß in der zweiten Richtung verfahren, z. B. in vertikaler Richtung angehoben wird. Folglich wird auch im Schulterbereich eine "Zwangskopplung" zwischen Werkzeughälften und Schulterhälften über schräge Linearführungen realisiert. Diese können die ohnehin durchzuführende Öffnungsbewegung der Werkzeughälften zugleich in eine Anhebebewegung der Schulterhälften umsetzen. Auch diese Maßnahmen ermöglichen es z. B., dass die Schulterhälften im Zuge des Öffnens der Werkzeughälften selbsttätig und folglich ohne weitere Antriebe angehoben werden. Im Zuge des Schließens der Form werden die Schulterhälften dann wiederum selbsttätig abgesenkt, so dass die Form vollständig geschlossen wird. Dieses lässt sich - so wie bei den Bodenhälften - über die beschriebenen Führungselemente realisieren. Auch im Zusammenhang mit der Schulterhälfte wird folglich besonders bevorzugt ohne zusätzliche Antriebe gearbeitet. Die Erfindung umfasst aber auch Ausführungsformen, bei welchen die Kopplung zusätzlich zu den Schrägführungen über einen oder mehrere Antriebe realisiert wird. So können beispielsweise Pneumatikzylinder vorgesehen sein, welche das Anheben der Schulterhälfte im Zuge des Öffnens des Werkzeuges bewirken oder zumindest unterstützen. Die Schrägführungen sind folglich nicht ausschließlich im Zusammenhang mit den selbsttätigen Bewegungen vorteilhaft, sondern unter anderem auch unter dem Aspekt der "Zuhaltekräfte". Denn auch auf die Schulterhälften wirken im Zuge der Blasformgebung erhebliche Kräfte. Daher schlägt die Erfindung bevorzugt vor, dass die Schulterhälfte mittels einer oder mehreren Linearführungen derart mit der Werkzeughälfte gekoppelt ist, dass eine Zuhaltung der Werkzeughälfte bzw. Werkzeughälften in der ersten Richtung zugleich eine Zuhaltung der Schulterhälfte bzw. der Schulterhälften entlang der zweiten Richtung bewirkt.

Der erste Aspekt der Erfindung (Bodenhälfte) und der zweite Aspekt der Erfindung (Schulterhälfte) lassen sich auch kombinieren, so dass die Erfindung besonders bevorzugt ein Blasformwerkzeug zur Verfügung stellt, bei dem sowohl die Bodenhälften als auch die Schulterhälften in der beschriebenen Weise über Linearführungen mit den Werkzeughälften gekoppelt sind und z. B. selbsttätig abgesenkt bzw. angehoben werden.

Von besonderer Bedeutung ist - wie erläutert - die Tatsache, dass die Führungselemente und Führungsgegenelemente so angeordnet sind, dass eine unter einem vorgegebenen Winkel schräg zur Horizontalen angeordnete Führungsbahn realisiert wird. Denn damit wird unter anderem erreicht, dass die Bewegung beim Öffnen der Werkzeughälften in horizontaler Richtung zumindest teilweise in eine Vertikalbewegung der Bodenhälften/Schulterhälften umgesetzt wird. Der Winkel der Führungsbahn gegenüber der Horizontalen kann insbesondere für die Bodenhälften 5° bis 85°, z. B. 5° bis 45°, vorzugsweise 5° bis 30°, z. B. 5° bis 25° betragen. Durch geeignete Auswahl des Winkels kann das Maß eingestellt werden, um das sich die Bodenhätfte im Zuge des Öffnens absenkt. Bei Behältern mit stark nach innen gewölbtem Behälterboden wird man ein größeres Absenkmaß benötigen und dann gegebenenfalls einen größeren Winkel wählen. Jedenfalls kann es zweckmäßig sein, wenn die Bodenplatte im Zuge des Öffnens der Werkzeughälften um ein Absenkmaß von 5 mm bis 20 mm, z.B. 5 mm bis 15 mm oder 5 mm bis 10 mm abgesenkt wird. Es liegt im Rahmen der Erfindung, dass der Winkel der Führungsbahn für die Schulterhälfte (in etwa) dem Winkel der Führungsbahn für die Bodenhälfte entspricht. Die für Bodenhälfte angegebenen Werte können folglich auch für die Schulterhälfte in Frage kommen. Es ist jedoch auch möglich, dass für die Schulterhälfte ein deutlich vergrößertes Anhebemaß erforderlich ist, da der Behälter im Schulterbereich in der Regel eine kompliziertere Struktur aufweist als im Bodenbereich. Vor diesem Hintergrund schlägt die Erfindung vorzugsweise vor, dass der Winkel der Führungsbahn gegenüber der Horizontalen 5° bis 85°, z. B. 5° bis 65° beträgt. Das Anhebemaß kann für die Schulterhälfte - wie erläutert - größer sein als das Absenkmaß für die Bodenhälfte. In der Praxis kann das Anhebemaß z. B. 5 mm bis 60 mm, vorzugsweise 20 mm bis 50 mm betragen. Durch Variation des Winkels lässt sich in Abhängigkeit von dem Öffnungsmaß auch das Anhebemaß bzw. Absenkmaß einstellen.

Um das Absenken des Bodens im Zuge des Öffnens des Werkzeuges zu gewährleisten, ist es zweckmäßig, dass die Bodenhälften im Zuge der Öffnungsbewegung den Werkzeughälften nicht "vollständig" in horizontaler Richtung folgen, sondern sich selbsttätig von den Werkzeughälften entfernen und dabei entlang der Führungsbahn abgesenkt werden. Dieses kann grundsätzlich allein mit der Gewichtskraft der Bodenhälften realisiert werden. Im Zuge des Öffnens der Werkzeughälften gleiten die Bodenhälften dann aufgrund ihrer Gewichtskraft an der Führungsbahn nach unten. Besonders bevorzugt wird dieses jedoch durch Federkraft realisiert bzw. unterstützt. So schlägt die Erfindung in bevorzugter Weiterbildung vor, dass zwischen Werkzeughälfte und Bodenhälfte zumindest eine Feder, z.B. Schraubendruckfeder, wirkt, welche die Bodenhälfte im Zuge des Öffnens des Werkzeuges entgegen der Öffnungsrichtung drückt. Dabei kann grundsätzlich eine Feder, z.B. Schraubendruckfeder, je Werkzeughälfte ausreichen. Vorzugsweise werden zumindest zwei Federn je Werkzeughälfte eingesetzt. Im Zuge des horizontalen Verfahrens der Werkzeughälften in Öffnungsrichtung drücken die Federn die Bodenhälfte von der Werkzeughälfte weg, so dass die Bodenhälften entlang der schrägen Führungsbahn nach unten abgesenkt werden. Im Zuge des Schließens der Werkzeughälften werden die Bodenhälften dann über die Schließkraft zurück auf die Werkzeughälften hin zu und folglich entgegen der Schließrichtung bewegt, so dass die Feder im Zuge des Schließens des Werkzeuges über die Schließkraft gespannt wird. Auch im Falle der Schulterhälften schlägt die Erfindung besonders bevorzugt vor, dass zwischen der Werkzeughälfte und der Schulterhälfte zumindest eine Feder, z.B. Schraubendruckfeder, wirkt, welche die Schulterhälfte im Zuge des Öffnens des Werkzeuges entgegen der Öffnungsrichtung drückt. Die obigen Erläuterungen zu der Bodenhälfte, insbesondere hinsichtlich der Feder, gelten für die Schulterhälfte entsprechend. Über die Schrägführungen lässt sich gegebenenfalls mir Unterstützung von Federkraft folglich ein selbsttätiges Absenken der Bodenhälften und/oder selbsttätiges Anheben der Schulterhälften realisieren. Wie bereits erläutert, kann es zweckmäßig sein, zur Unterstützung dieser Bewegungen zusätzliche Antriebe, z.B. Pneumatikantriebe, vorzusehen. Dieses ist insbesondere dann zweckmäßig, wenn die Schrägführungen unter einem verhältnismäßig großen Winkel zur Horizontalen angeordnet sind. Will man folglich ein großes Absenkmaß bzw. Anhebemaß realisieren, so kann es vorteilhaft sein, die Schrägführungen unter einem verhältnismäßig großem Winkel anzuordnen. Dann kann es vorteilhaft sein, zur Unterstützung der Bewegung die beschriebenen Antriebe vorzusehen.

Sofern die Anordnung so getroffen ist, dass das Absenken bzw. Anheben von Bodenhälfte und/ oder Schulterhälfte selbsttätig erfolgt, so wird das Absenken bzw. Anheben in der Regel während des Verfahrens der Werkzeughälften erfolgen. Insbesondere wenn mit (zusätzlichen) Antrieben gearbeitet wird, kann das Verfahren von Bodenhälfte und/oder Schulterhälfte jedoch auch zeitversetzt realisiert werden. So kann die Bodenhälfte erst nach dem Öffnen des Werkzeuges abgesenkt werden und vor dem Schließen des Werkzeuges angehoben werden. Die Schulterhälfte kann z.B. nach dem Öffnen des Werkzeuges angehoben und vor dem Schließen des Werkzeuges abgesenkt werden.

Grundsätzlich besteht die Möglichkeit, dass der Verstellweg der Bodenhälfte relativ zu der Werkzeughälfte im Zuge des Öffnens des Werkzeuges in etwa dem Öffnungsweg der jeweiligen Werkzeughälfte entspricht. Dieses würde dazu führen, dass die Bodenhälften ausschließlich oder im Wesentlichen abgesenkt werden und ansonsten ihre horizontale Position nicht verändern. Während die Werkzeughälften geöffnet werden, würden die beiden Bodenhälften abgesenkt und ansonsten gegeneinander anliegen. In diesem Fall müsste eine Entnahme des Werkzeuges zur Seite oder nach oben erfolgen. Aus diesem Grunde schlägt die Erfindung in vorteilhafter Weiterbildung vor, dass der Verstellweg der Bodenhälften in horizontaler Richtung relativ zu den Werkzeughälften geringer ist als der Öffnungsweg der Werkzeughälften selbst, so dass die Bodenhälften zwar einerseits abgesenkt, andererseits auch auseinander gefahren werden. Dieses ermöglicht gegebenenfalls die Entnahme des Hohlkörpers über den Bodenbereich nach unten weg. Insbesondere besteht jedoch die Möglichkeit, Grate bzw. Butzen über den entstehenden Zwischenraum zwischen den Bodenhälften zu entfernen. Der Verstellweg wird dabei vorzugsweise durch Endanschläge begrenzt. Die Erläuterungen zu Öffnungsweg, Endanschlägen usw. gelten für die Schulterhälfte entsprechend.

Grundsätzlich besteht die Möglichkeit, Führungselemente und Führungsgegenelemente unmittelbar an die Werkzeughälfte einerseits und die Bodenhälfte andererseits anzuschließen. Unter Berücksichtigung der Tatsache, dass die Werkzeughälften häufig jeweils an einer Halteplatte befestigt sind, schlägt die Erfindung in bevorzugter Weiterbildung vor, dass die jeweilige Bodenhälfte verschiebbar an diese Halteplatte angeschlossen ist. Dazu kann es weiter zweckmäßig sein, wenn an die Halteplatte eine Befestigungsplatte, z.B. unterseitig eine Fußplatte angeschlossen ist, so dass die Halteplatte mit der Fußplatte gleichsam einen L-förmigen Querschnitt bilden. An diese Fußplatte können die Führungselemente bzw. Führungsgegenelemente angeschlossen sein, z.B. der Führungsschlitten (oder gegebenenfalls eine Führungsschiene). Das Führungselement (z.B. die Führungsschiene) kann unmittelbar an die Bodenplatte angeschlossen sein. Die Erfindung umfasst aber auch Ausführungsformen, bei denen an die Bodenplatte eine weitere Befestigungsplatte oder Befestigungsstege angeschlossen sind, welche dann die Führungselemente aufnehmen. Die Erläuterungen zu der Halteplatte, Befestigungsplatte usw. gelten für die Schulterhälfte entsprechend.

Jedenfalls ist es zweckmäßig, wenn die Werkzeughälften einerseits (oder eine daran befestigte Halteplatte und/oder Befestigungsplatte) und die Bodenhälften/Schulterhälften andererseits (oder eine daran befestigte Befestigungsplatte oder Trägerplatte) jeweils schräge Montageflächen für die Führungselemente und/oder Führungsgegenelemente aufweisen.

Im Folgenden wird die Erfindung anhand einer lediglich ein Ausführungsbeispiel darstellenden Zeichnung näher erläutert. Es zeigen:
- Fig. 1: Ein erste Ausführungsform eines erfindungsgemäßen Blasformwerkzeuges in einer vereinfachten Seitenansicht in einer ersten Funktionsstellung (Werkzeug geschlossen),
- Fig. 2: den Gegenstand nach Fig. 1 in einer zweiten Funktionsstellung (Werkzeug teilgeöffnet) und
- Fig. 3: den Gegenstand nach Fig. 2 in einer weiteren Funktionsstellung (Werkzeug offen),
- Fig. 4: ausschnittsweise eine Ansicht auf den Gegenstand nach Fig. 1 aus Richtung des Pfeils A),
- Fig. 5: einen Schnitt B-B durch den Gegenstand nach Fig. 4 bei geschlossenem Werkzeug,
- Fig. 6: einen Schnitt B-B durch den Gegenstand nach Fig. 4 bei geöffnetem Werkzeug,
- Fig. 7: einen Schnitt C-C durch den Gegenstand nach Fig. 4 bei geöffnetem Werkzeug,
- Fig. 8: eine zweite Ausführungsform eines erfindungsgemäßen Blasformwerkzeuges in einer ersten Funktionsstellung (Ausschnitt),
- Fig. 9: den Gegenstand nach Fig. 8 in einer zweiten Funktionsstellung.

In den Figuren ist ein Blasformwerkzeug für die Herstellung von Behältern mit einem nach innen gewölbten Behälterboden dargestellt. Ein solches Werkzeug besteht in seinem grundsätzlichen Aufbau aus zwei Werkzeughälften 1a, 1b, welche eine innere Kontur 2 aufweisen bzw. eine solche Kontur bilden. Die beiden Werkzeughälften 1a, 1b werden zum Öffnen und Schließen des Werkzeuges in horizontaler Richtung X gegeneinander verfahren.

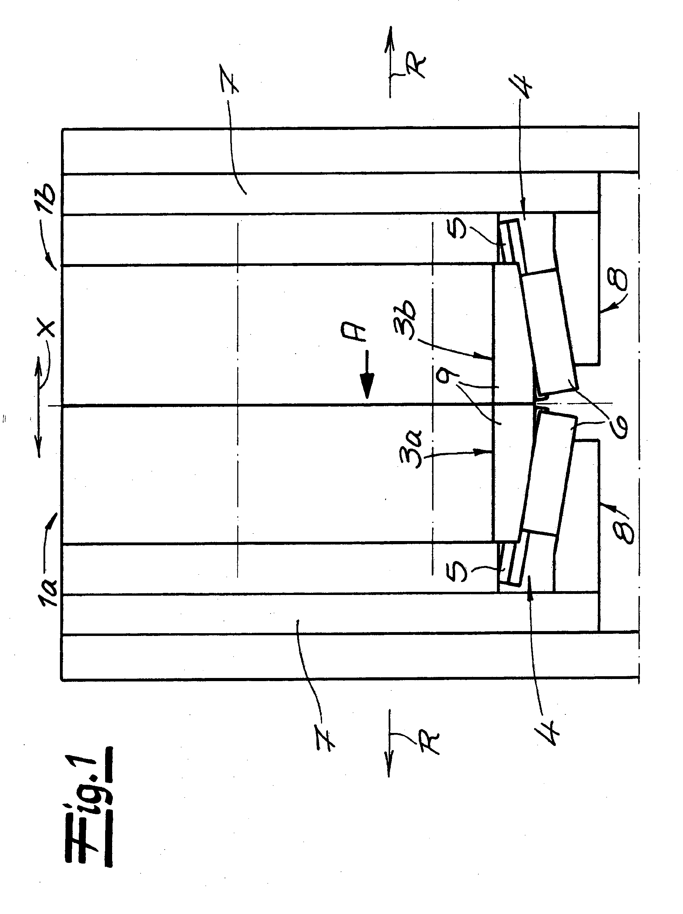

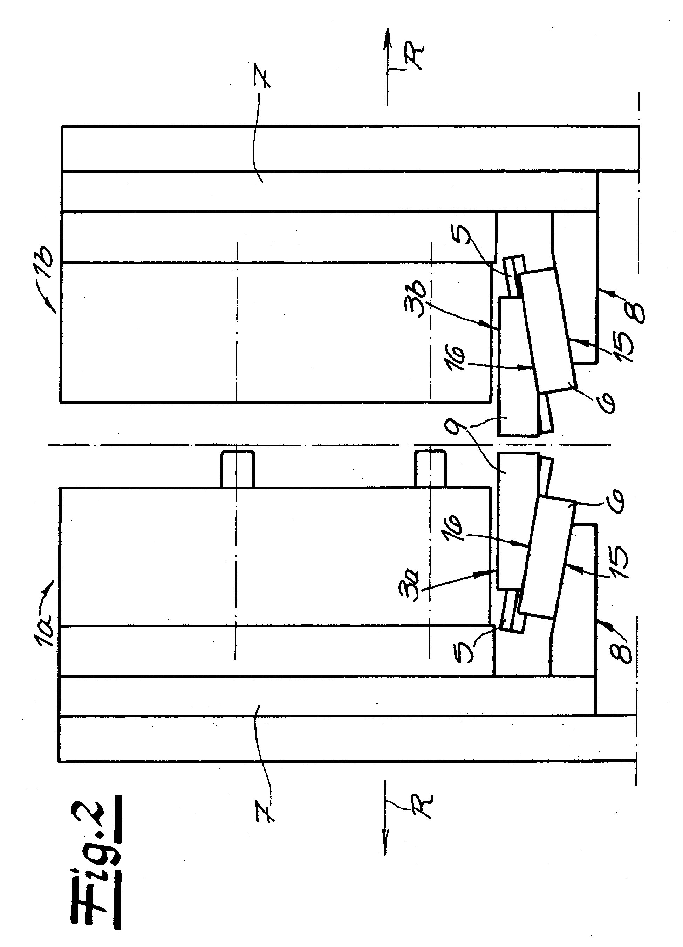

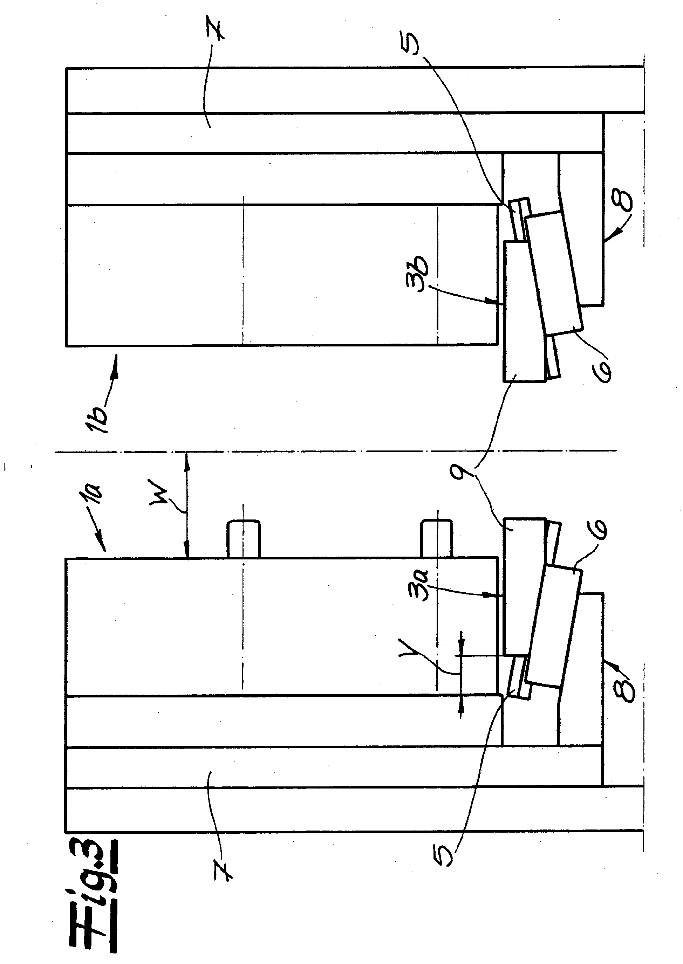

Die Fig. 1, 2 und 3 zeigen dabei drei unterschiedliche Funktionsstellungen, wobei das Werkzeug in der Fig. 1 geschlossen, in der Fig. 2 teilgeöffnet und in der Fig. 3 vollständig geöffnet ist. In der in Fig. 3 dargestellten geöffneten Funktionsstellung lässt sich nun z.B. ein nicht dargestellter Extruder bzw. Blaskopf in die Form einfahren, in welchem ein schlauchförmiger Vorformling erzeugt wird. Das Werkzeug wird dann im noch heißen Zustand des Vorformlings geschlossen und der Vorformling wird durch mittels des Blasdorns eingebrachter Druckluft aufgeweitet, so dass der betreffende Behälter die Innenkontur des Blasformwerkzeuges erhält. Einzelheiten sind in den Figuren nicht dargestellt.

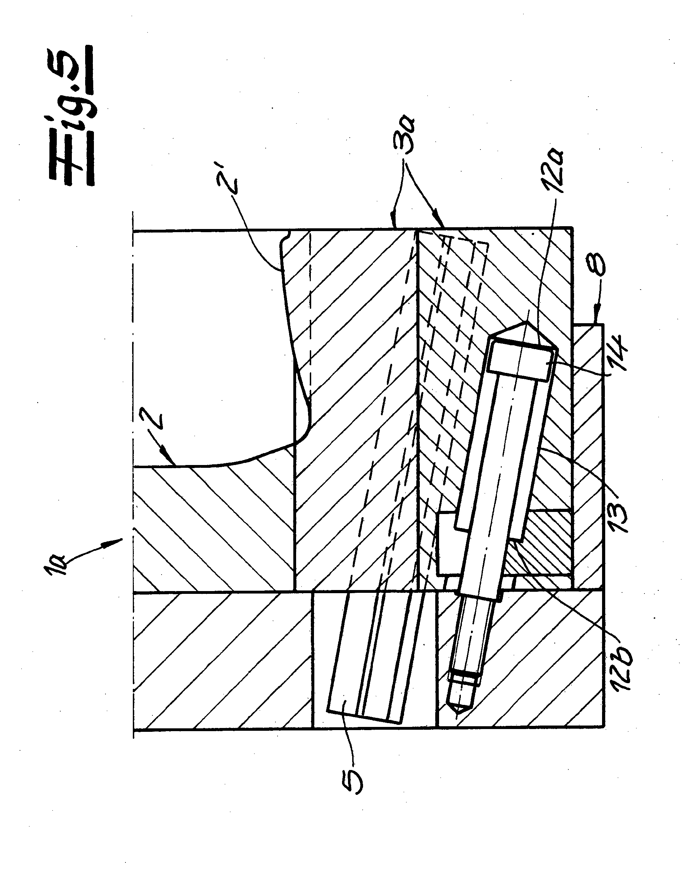

Im Rahmen der Erfindung soll nun nach einem ersten Aspekt insbesondere ein Behälter mit einem nach innen gewölbten Behälterboden hergestellt werden. Dazu weist die Kontur 2 eine Erhöhung 2' für diese Innenwölbung auf, welche beispielsweise in Fig. 5 angedeutet ist. Um das Entformen des Behälters zu erleichtern bzw. zu ermöglichen, sind an die beiden Werkzeughälften 1a, 1b jeweils eine gegenüber der Werkzeughälfte in vertikaler Richtung bewegbare und folglich absenkbare und anhebbare Bodenhälfte 3a bzw. 3b angeschlossen. Die Bodenhälften 3a, 3b weisen ebenfalls Teile der Kontur 2 und insbesondere die Erhöhung 2' auf, so dass die Bodenhälften 3a, 3b grundsätzlich Bestandteile der Werkzeughälften 1 a, 1 b sind. Im Rahmen der vorliegenden Beschreibung werden die Bodenhälften 3a, 3b jedoch als separate Komponenten betrachtet, welche gegenüber den Werkzeughälften 1 a, 1 b bewegbar bzw. verstellbar und insbesondere anhebbar und absenkbar sind. Denn im Zuge des Öffnens des Werkzeuges sollen die Bodenhälften 3a, 3b um ein Absenkmaß M abgesenkt werden, um zu gewährleisten, dass die Erhöhung 2' für die Innenwölbung des Behälters beim Entformen keine Probleme bereitet.

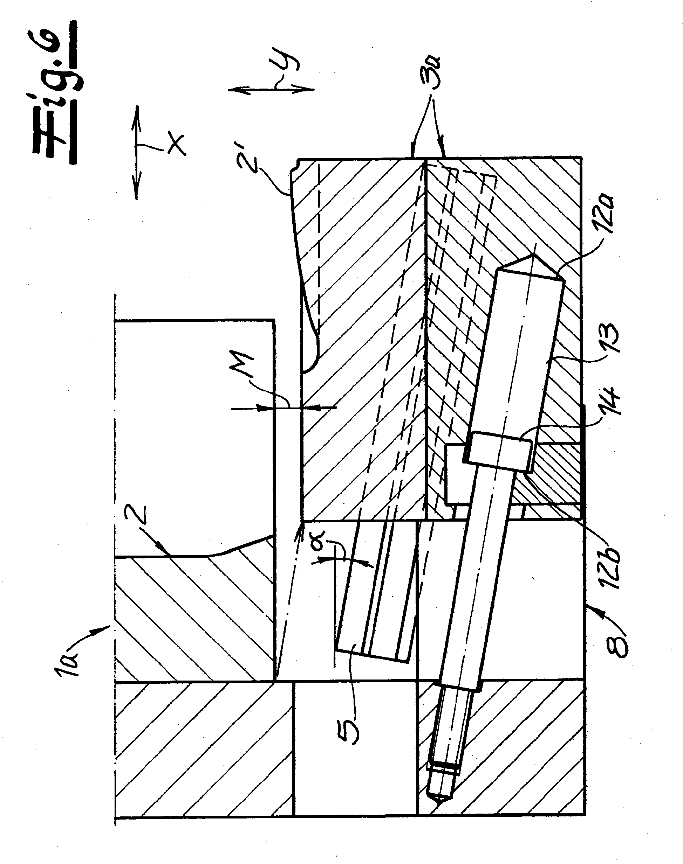

Erfindungsgemäß erfolgt dieses Absenken der Bodenhälften 3a, 3b um das Absenkmaß M nun nicht mittels separater Antriebe, sondern selbsttätig und folglich automatisch im Zuge des Öffnens der Werkzeughälften 1a, 1b. Dazu sind die Bodenhälften 3a, 3b derart mit den Werkzeughälften 1a, 1 b gekoppelt, dass die Bodenhälften 3a, 3b im Zuge des Verfahrens der Werkzeughälften 1 a, 1 b in horizontaler Richtung X selbsttätig um das Absenkmaß M in vertikaler Richtung Y abgesenkt werden. Dieses ergibt sich aus einer vergleichenden Betrachtung der Fig. 1, 2 und 3 oder aus einer vergleichenden Betrachtung der Fig. 5 und 6. Die Öffnungsrichtung R ist angedeutet.

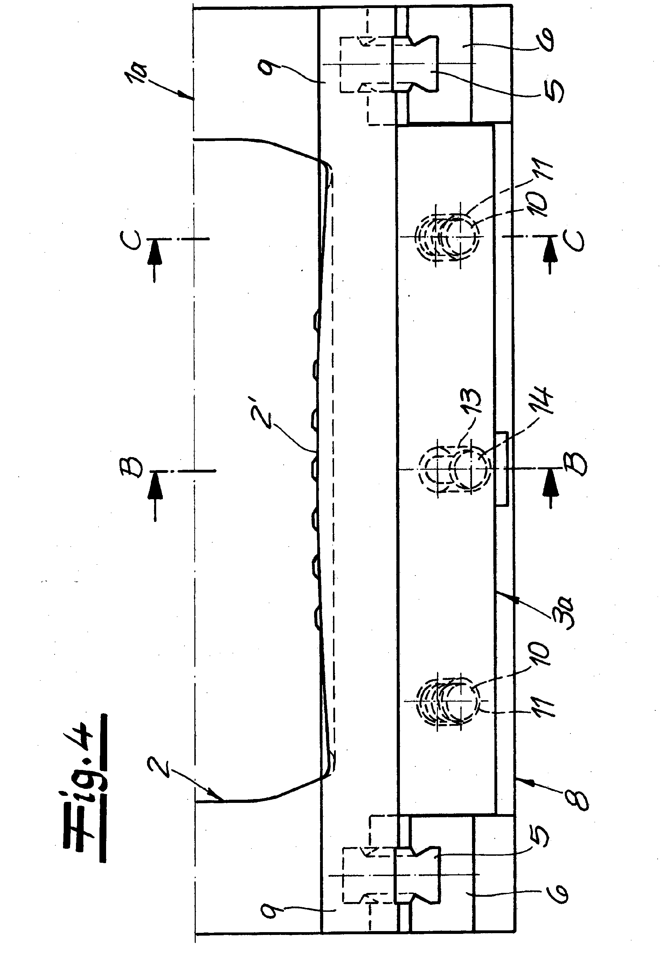

Betrachtet man beispielsweise die Fig. 1, 2 und 3, so ist erkennbar, dass die Bodenhälften 3a, 3b im Zuge des Öffnens der Werkzeughälften 1a, 1b nach und nach selbsttätig abgesenkt werden. Dieses wird im Ausführungsbeispiel dadurch realisiert, dass die jeweilige Bodenhälfte 3a bzw. 3b mittels einer oder mehrerer schräger Linearführungen 4 derart mit der jeweiligen Werkzeughälfte 1 a bzw. 1 b gekoppelt ist, dass die Bodenhälfte 3a, 3b im Zuge des horizontalen Verfahrens der Werkzeughälfte 1a, 1b entlang einer unter einem vorgegebenen Winkel α schräg zur Horizontalen angeordneten Führungsbahn verschoben und dabei abgesenkt wird. Dieser Winkel α beträgt im Ausführungsbeispiel etwa 10°. Die Linearführung 4 wird im Ausführungsbeispiel durch einerseits ein Führungselement und andererseits ein Führungsgegenelement realisiert. Das unter einem Winkel α schräg zur Horizontalen angeordnete Führungselement ist im Ausführungsbeispiel als Führungsschiene 5 und das Führungsgegenelement als Führungsschlitten 6 ausgebildet. Es ist erkennbar, dass die Bodenhälfte 3a, 3b fest mit einem oder mehreren Führungselementen, nämlich Führungsschienen 5 verbunden ist, während die Werkzeughälfte 1a bzw. 1b fest mit einem oder mehreren Führungsgegenelementen, nämlich Führungsschlitten 6 verbunden ist. Im Ausführungsbeispiel handelt es sich dabei um Linearwälzführungen, d.h., die Führungsschlitten 6 werden wälzgelagert auf den Führungsschienen 5 geführt. Grundsätzlich sind aber auch Gleitführungen einsetzbar. Insbesondere in Fig. 4 ist erkennbar, dass je Bodenhälfte bzw. Werkzeughälfte jeweils zwei Linearführungen 4 und folglich jeweils zwei Führungsschienen 5 und zwei Führungsschlitten 6 vorgesehen sind.

In dem dargestellten Ausführungsbeispiel sind die Führungsgegenelemente 6 nun nicht unmittelbar an die Werkzeughälften 1a, 1b angeschlossen, sondern die Werkzeughälften 1 a, 1 b sind in an sich bekannter Weise an Halteplatten 7 befestigt und die Führungsgegenelemente 6 sind (mittelbar) an diesen Halteplatten befestigt. Dazu ist an jede Halteplatte 7 im unteren Bereich eine als Fußplatte 8 ausgebildete Trägerplatte angeschlossen und die Führungsschlitten 6 sind unmittelbar an diesen Fußplatten 8 befestigt, nämlich auf diese Fußplatten aufgesetzt, wobei die Fußplatten oberseitig die für die Schrägführung erforderliche schräge Fläche 15 aufweisen. Die Führungselemente 5 und folglich Führungsschienen 5 sind unmittelbar an der Bodenhälfte 3a, 3b befestigt, wobei die seitlichen Enden der Bodenhälften 3a, 3b als Trägerstege 9 ausgebildet sind, die unterseitig abgeschrägt sind, so dass die Führungsschienen 5 unter dem vorgegebenen Winkel α an den Bodenplatten 3a, 3b befestigt sind. Die seitlichen Enden der Bodenplatten 3a, 3b bilden folglich Trägerstege 9 mit den schrägen Flächen 16, wobei diese Trägerstege 9 im Ausführungsbeispiel einstückig mit der Bodenplatte 3a, 3b ausgebildet sind.

Um nun zuverlässig zu gewährleisten, dass die Bodenhälften 3a, 3b im Zuge des Öffnens des Werkzeuges um das gewünschte Maß M abgesenkt werden, wird diese Absenkbewegung im Ausführungsbeispiel durch Federkraft unterstützt. Zwischen Werkzeughälfte 1a, 1 b und der zugeordneten Bodenhälfte 3a, 3b wirken jeweils zwei Federn 10, welche als Schraubendruckfedern 10 ausgebildet sind und in entsprechenden Ausnehmungen 11 der Bodenhälfte 3a, 3b bzw. Werkzeughälfte 1a, 1b angeordnet sind. Im Zuge des Öffnens des Werkzeuges, d.h., im Zuge des Verfahrens der Werkzeughälften 1a, 1b in horizontaler Richtung drücken die Federn 10 die beiden Bodenhälften 3a, 3b entgegen der Öffnungsrichtung R des Werkzeuges, d.h., die Bodenhälften 3a, 3b werden im Zuge des Öffnens des Werkzeuges aufeinander zu "gedrückt". Auf diese Weise werden die Bodenhälften 3a, 3b aufgrund der Schrägführung um das Maß M abgesenkt, und zwar ohne, dass dazu separate Antriebe erforderlich sind. Vielmehr erfolgt das Absenken selbsttätig aufgrund der Federkraft der Federn 10 sowie gegebenenfalls der Gewichtskraft der Bodenhälften 3a, 3b.

Im Zuge des Schließens der Werkzeughälften 1 a, 1 b entgegen der Öffnungsrichtung R stoßen die Bodenhälften 3a, 3b gegeneinander, so dass die Bodenhälften 3a, 3b aufgrund der Schließkraft entlang der Linearführungen 4 in ihre in Fig. 1 dargestellte Ausgangsposition zurückgedrückt werden. Mit Hilfe der Schließkraft werden dann folglich die Federn 10 gespannt, so dass diese anschließend im Zuge des Öffnens der Werkzeughälften 1 a, 1 b die Bodenhälften 3a, 3b wieder absenken können. Das Absenkmaß M beträgt im Ausführungsbeispiel bei einem Winkel α von etwa 10° etwa 5 mm bis 10 mm, z.B. etwa 7 bis 8 mm. Bei einem größeren Winkel α kann auch ein größeres Absenkmaß erreicht werden, z. B. einen Winkel α von etwa 25° kommt ein Absenkmaß von etwa 10° in Betracht. Hier ist eine Anpassung an die Gegebenheiten in weiten Grenzen möglich.

Dabei ergibt sich aus einer vergleichenden Betrachtung der Fig. 1 bis 3 oder auch eine vergleichende Betrachtung der Fig. 5 und 6, dass der Verstellweg V der Bodenhälften 3a, 3b durch Endanschläge 12a, 12b begrenzt ist, welche von Ausnehmungen 13 gebildet werden. Insbesondere eine vergleichende Betrachtung der Fig. 5 und 6 macht deutlich, dass der Schraubenkopf 14 einer im Innern der Ausnehmung 13 angeordneten Schraube bei vollständig geschlossener Form an den (rechten) Endanschlag 12a der Ausnehmung 13 stößt (vgl. Fig. 5) und bei vollständig geöffneter Form an den (linken) Endanschlag 12b der Ausnehmung 13 stößt (vgl. Fig. 6). Das bedeutet, dass der Verstellweg V der Bodenhälfte relativ zu der jeweiligen Werkzeughälfte in horizontaler Richtung geringer ist als der Öffnungsweg W der jeweiligen Werkzeughälfte. Fig. 3 zeigt daher, dass der Abstand zwischen den Bodenhälften 3a und 3b geringer ist als der Abstand zwischen den Werkzeughälften 1 a, 1b. Dennoch ermöglicht das Auseinander fahren der Bodenhälften zusätzlich zu dem Absenken der Bodenhälften, dass beispielsweise Grate oder Butzen und folglich Abfallteile ohne weiteres nach unten entsorgt werden können.

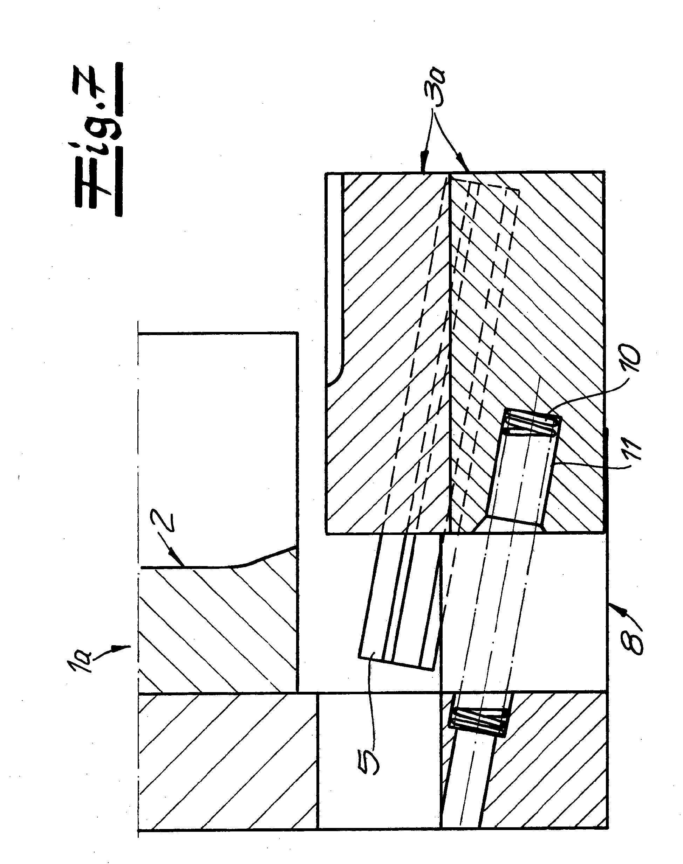

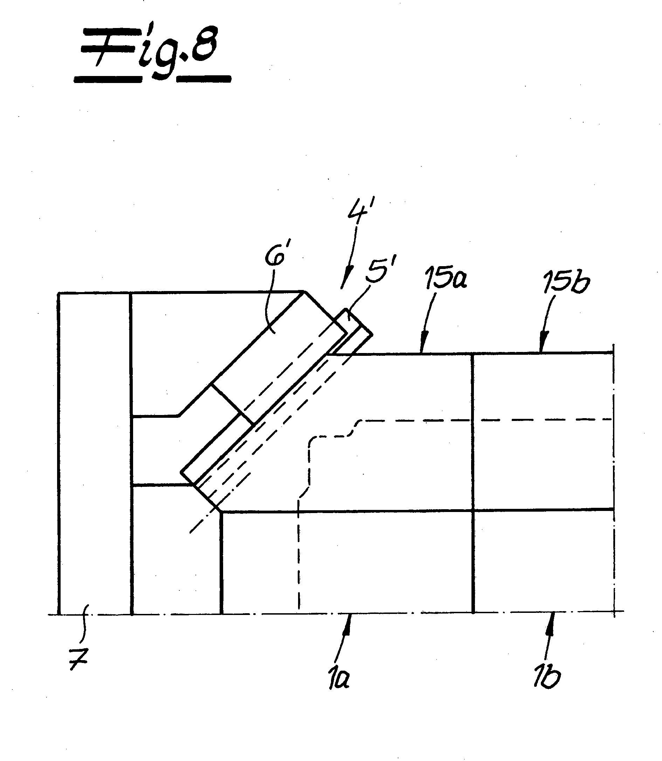

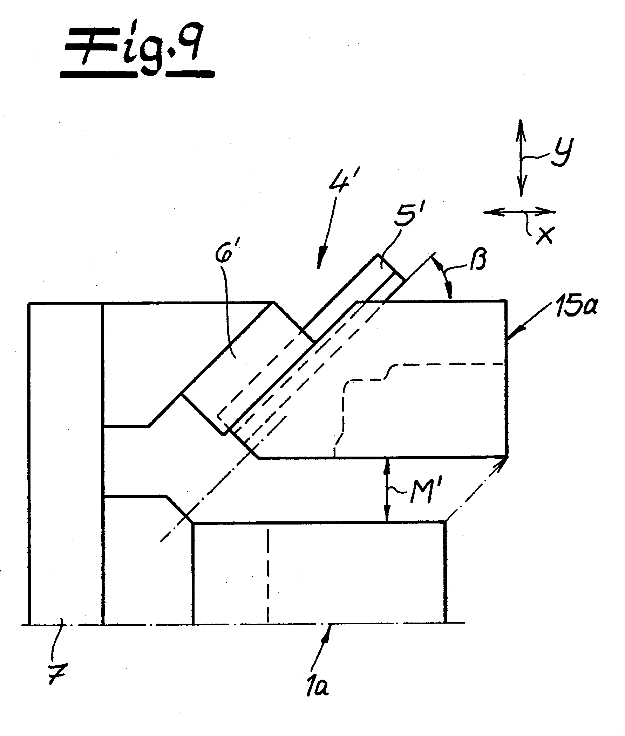

Anhand der Fig. 1 bis 7 wurde bislang der erste Aspekt der Erfindung erläutert, welche die selbsttätig absenkbaren Bodenhälften betrifft. Die Erfindung lässt sich in entsprechender Weise auch für den Schulterbereich und folglich für die Schulterhälften 15a , 15b realisieren. Dazu wird auf die Fig. 8 und 9 verwiesen. Die dargestellten Ausführungsformen können auch miteinander kombiniert werden, d. h. das Blasformwerkzeug kann mit absenkbarem Boden und anhebbarerer Schulter ausgebildet sein.

Eine vergleichende Betrachtung der Fig. 8 und 9 zeigt, dass die Schulterhälften 15a, 15b als separate Komponenten betrachtet werden, welche gegenüber den Werkzeughälften 1a, 1b anhebbar und absenkbar sind. Im Zuge des Öffnens des Werkzeuges sollen die Schulterhälften 15a, 15b um ein Anhebemaß M' angehoben werden, um zu gewährleisten, dass die Struktur des Schutterbereiches (Auslassstutzen, Griff etc.) beim Entformen des Behälters keine Probleme bereitet. Erfindungsgemäß erfolgt dieses Anheben der Schulterhälften 15a, 15b um das Anhebemaß M' nicht mittels separater Antriebe, sondern - wie im Falle der Bodenhälften - selbsttätig und folglich automatisch im Zuge des Öffnens der Werkzeughälften 1a, 1b. Dazu sind die Schulterhälften 15a, 15b derart mit den Werkzeughälften 1a, 1b gekoppelt, dass die Schulterhälften 15a, 15b im Zuge des Verfahrens der Werkzeughälften 1a, 1b in horizontaler Richtung X selbsttätig um das Anhebemass M' in vertikaler Richtung Y angehoben werden. Dieses wird im Ausführungsbeispiel dadurch realisiert, dass die jeweilige Schulterhälfte 15a, 15b mittels einer oder mehrerer schräger Linearführungen 4' derart mit der jeweiligen Werkzeughälfte gekoppelt ist, dass die Schulterhälfte 15a, 15b im Zuge des horizontalen Verfahrens der Werkzeughälfte entlang einer unter einem vorgegebenen Winkel ß schräg zur horizontalen angeordneten Führungsbahn verschoben und dabei angehoben wird. Dieser Winkel ß beträgt im Ausführungsbeispiel etwa 45°. Die Linearführung 4' wird im Ausführungsbeispiel durch einerseits ein Führungselement und andererseits ein Führungsgegenelement realisiert. Das unter einem Winkel ß schräg zur Horizontalen angeordnete Führungselement 5' kann z. B. als Führungsschiene oder Führungsschlitten ausgebildet sein. Das Führungsgegenelement 6' kann entsprechend als Führungsschlitten oder Führungsschiene ausgebildet sein. Einzelheiten sind in den Figuren 8 und 9 nicht dargestellt. Es ist jedoch erkennbar, dass die Schulterhälfte 15a, 15b fest mit einem oder mehreren Führungselementen 5' verbunden ist, während die Werkzeughälfte 1a, 1 b fest mit einem oder mehreren Führungsgegenelementen 6' verbunden ist. Um im Falle der Schulterhälften 15a, 15b zu gewährleisten, dass die Schulterhälften um das Erforderliche Maß angehoben werden, wird die Anhebebewegung im Ausführungsbeispiel durch Federkraft erzeugt, bzw. unterstützt. Zwischen Werkzeughälfte einerseits und Schulterhälfte andererseits wirken eine oder mehrere Federn, die im Ausführungsbeispiel jedoch nicht dargestellt sind. Es besteht auch hier die Möglichkeit, dass die Federn im Zuge des Schließens gespannt werden, so dass diese anschließend im Zuge des Öffnens die Schulterhälften anheben können.

In den Figuren sind folglich Ausführungsformen dargestellt, bei denen auf aktive Antriebe verzichtet wird. Die Erfindung umfasst jedoch auch Ausführungsformen, bei denen das Absenken bzw. Anheben über zusätzliche Antriebe, z.B. Pneumatikzylinder unterstützt wird. Dieses kann insbesondere bei der in den Fig. 8 und 9 dargestellten Anordnung zweckmäßig sein, da dort mit einem verhältnismäßig großen Winkel β zwischen der Schrägführung und der Horizontalen gearbeitet wird. Einzelheiten sind in den Figuren nicht dargestellt.

Im Übrigen ist anhand der Figuren erkennbar, dass die Schrägführungen durch die "Kraftumlenkung" auch die Zuhaltung des Werkzeuges vereinfachen. So bewirkt eine Zuhaltung der Werkzeughälften 1a, 1b zugleich eine "automatische" Zuhaltung der Bodenhälften und/oder Schulterhälften. Es ist folglich ausreichend, die Werkzeughälften über eine geeignete Schließvorrichtung zu schließen und dann sind für Bodenhälften und/oder Schulterhälften keine separaten Schließvorrichtungen oder Zuhaltevorrichtungen erforderlich.

## Patentansprüche

1. Blasformwerkzeug für die Herstellung von Hohlkörpern im Wege der Blasformgebung, insbesondere für die Herstellung von Behältern mit nach innen gewölbtem Behälterboden,
mit zumindest zwei Werkzeughälften (1a, 1b), welche zum Öffnen und Schließen des Werkzeuges in einer horizontalen Richtung (X) gegeneinander verfahrbar sind,
wobei an mehrere oder jede Werkzeughälfte (1 a, 1 b) jeweils eine gegenüber der Werkzeughälfte (1 a, 1 b) in zumindest einer vertikalen Richtung (Y) bewegbare Bodenhälfte (3a, 3b) und/oder Schulterhälfte (15a, 15b) angeschlossen ist,
wobei die Bodenhälfte (3a, 3b) und/oder Schulterhälfte (15a, 15b) mittels einer oder mehrerer unter einem vorgegebenen Winkel (α, β) schräg zu der horizontalen Richtung (X) angeordneten Linearführungen (4, 4') derart mit der Werkzeughälfte (1a, 1b) gekoppelt ist,
dass die Bodenhälfte (3a, 3b) bzw. Schulterhälfte (15a, 15b) im Zuge des Verfahrens der Werkzeughälfte (1 a, 1 b) entlang einer unter einem vorgegebenen Winkel (α, β) schräg zu der horizontalen Richtung (X) angeordneten Führungsbahn verschoben und um ein vorgegebenes Maß (M, M') in der vertikalen Richtung (Y) abgesenkt und/oder angehoben wird, **dadurch gekennzeichnet dass** eine Zuhaltung der Werkzeughälfte(n) in der horizontalen Richtung (X) zugleich eine Zuhaltung der Bodenhälfte(n) (3a, 3b) und/oder Schulterhälfte(n) (15a, 15b) entlang der vertikalen Richtung (Y) bewirkt.

2. Blasformwerkzeug nach Anspruch 1, **dadurch gekennzeichnet, dass** die Bodenhälfte (3a, 3b) und/oder die Schulterhälfte (15a, 15b) im Zuge des Verfahrens der Werkzeughälfte selbsttätig abgesenkt und/oder angehoben wird.

3. Blasformwerkzeug nach Anspruch 1 oder 2, **dadurch gekennzeichnet, dass** die Bodenhälfte (3a, 3b) und/oder die Schulterhälfte (15a, 15b) zusätzlich über zumindest einen Antrieb mit der jeweiligen Werkzeughälfte gekoppelt ist, welcher das Absenken und/oder Anheben bewirkt oder unterstützt.

4. Blasformwerkzeug nach einem der Ansprüche 1 bis 3, **dadurch gekennzeichnet, dass** der Winkel (α) 5° bis 85°, vorzugsweise etwa 5° bis 45°, z. B. etwa 5° bis 30° beträgt und/oder dass der Winkel (β) 5° bis 85°, vorzugsweise etwa 5° bis 60° beträgt.

5. Blasformwerkzeug nach einem der Ansprüche 1 bis 4, **dadurch gekennzeichnet, dass** die Bodenhälfte (3a, 3b) im Zuge des Öffnens des Werkzeuges um ein Absenkmaß (M) von etwa 5 mm bis 20 mm, z. B. 5 mm bis 10 mm abgesenkt wird und/oder dass die Schulterhälfte (3a, 3b) im Zuge des Öffnens des Werkzeuges um ein Anhebemaß (M') von etwa 5mm bis 50 mm angehoben wird.

6. Blasformwerkzeug nach einem der Ansprüche 1 bis 5, **dadurch gekennzeichnet, dass** die Bodenhälfte (3a, 3b) bzw. Schulterhälfte (15a, 15b) fest mit zumindest einem Führungselement (5, 5') und die Werkzeughälfte fest mit zumindest einem Führungsgegenelement (6, 6') verbunden sind.

7. Blasformwerkzeug nach einem der Ansprüche 1 bis 6, **dadurch gekennzeichnet, dass** die Bodenhälfte (3a, 3b) fest mit zumindest einer schräg unter vorgegebenem Winkel (α) zur ersten Richtung (X) angeordneten Führungsschiene (5) und die Werkzeughälfte (1a, 1b) fest mit zumindest einem auf der Führungsschiene (5) geführten Führungsschlitten (6) verbunden sind oder umgekehrt.

8. Blasformwerkzeug nach Anspruch 6 oder 7, **dadurch gekennzeichnet, dass** die Schulterhälfte (15a, 15b) fest mit zumindest einer schräg unter vorgegebenen Winkel (β) zur ersten Richtung (X) angeordneten Führungsschiene (5') und die Werkzeughälfte (1a, 1b) fest mit zumindest einem auf der Führungsschiene (5') geführten Führungsschlitten (6') verbunden sind oder umgekehrt.

9. Blasformwerkzeug nach einem der Ansprüche 1 bis 8, **dadurch gekennzeichnet, dass** die Linearführungen (4) als Linearwälzführungen oder Lineargleitführungen ausgebildet sind.

10. Blasformwerkzeug nach einem der Ansprüche 1 bis 9, **dadurch gekennzeichnet, dass** zwischen der Werkzeughälfte (1a, 1b) und der Bodenhälfte (3a, 3b) und/oder das zwischen der Werkzeughälfte (1 a, 1 b) unter der Schulterhälften (15a, 15b) zumindest eine Feder, z.B. Schraubendruckfeder, wirkt, welche die Bodenhälfte (3a, 3b) bzw. Schulterhälfte (15a, 15b) im Zuge des Öffnens des Werkzeuges entgegen der Öffnungsrichtung (R) drückt.

11. Blasformwerkzeug nach Anspruch 10, **dadurch gekennzeichnet, dass** die Bodenhälfte (3a, 3b) bzw. Schulterhälfte (15a, 15b) im Zuge des Schließens des Werkzeuges gegen die Kraft der Feder (10) gedrückt wird, so dass die Feder (10) gespannt wird.

12. Blasformwerkzeug nach einem der Ansprüche 1 bis 11, **dadurch gekennzeichnet, dass** zwischen Werkzeughälfte (1a, 1b) und der Bodenhälfte (3a, 3b) und/oder zwischen Werkzeughälfte (1a, 1b) und der Schulterhälfte (15a, 15b) zumindest ein pneumatischer Antrieb wirkt.

13. Blasformwerkzeug nach einem der Ansprüche 1 bis 12, **dadurch gekennzeichnet, dass** der Verstellweg (V) der Bodenhälfte (3a, 3b) bzw. Schulterhälfte (15a, 15b) gegenüber der Werkzeughälfte (1a, 1b) durch Endanschläge (12a, 12b) begrenzt und in horizontaler Richtung vorzugsweise geringer als der Öffnungsweg (W) der Werkzeughälfte (1a, 1b) ist.

14. Blasformwerkzeug nach einem der Ansprüche 1 bis 13, wobei die Werkzeughälften (1 a, 1b) jeweils an eine Halteplatte (7) angeschlossen sind, **dadurch gekennzeichnet, dass** die Bodenhälften (3a, 3b) bzw. Werkzeughälften (15a, 15b) verschiebbar an die Halteplatten (7) angeschlossen sind.

15. Blasformwerkzeug nach einem der Ansprüche 6 bis 14, **dadurch gekennzeichnet, dass** die Führungselemente (5, 5') und/oder Führungsgegenelemente (6, 6') an einer Befestigungsplatte befestigt sind, welche an der Werkzeughälfte (1 a, 1 b) oder der Halteplatte (7) befestigt ist.

## Claims

1. A blow moulding tool for producing hollow bodies by means of a blow moulding process, particularly for producing containers with an inwardly curved container base,
comprising at least two tool halves (1a, 1 b) that are displaceable toward one another in a horizontal direction (X) for opening and closing the tool,
wherein a base half (3a, 3b) and/or shoulder half (15a, 15b) that is movable at least in a vertical direction (Y) relative to the tool half (1a, 1 b) is connected to several or each tool half (1 a, 1 b),
wherein the base half (3a, 3b) and/or shoulder half (15a, 15b) is coupled with the tool half (1 a, 1 b) via one or more linear guides (4, 4') arranged at a predefined angle (α, β) relative to the horizontal direction (X) in such manner,
that the base half (3a, 3b) or shoulder half (15a, 15b) is slid along a guide track arranged at a predefined angle (α, β) relative to the horizontal direction (X) and lowered and/or raised by a predefined dimension (M, M') in the vertical direction (Y) as the tool half (1a, 1 b) is displaced, **characterized in that** a fixing of the tool half/halves in the closed position in the horizontal direction (X) simultaneously causes a fixing of the base half/halves (3a, 3b) and/or shoulder half/halves (15a, 15b) in the closed position in the vertical direction (Y).

2. The blow moulding tool according to claim 1, **characterized in that** the base half (3a, 3b) and/or shoulder half (15a, 15b) is lowered and/or raised automatically as the tool half is displaced.

3. The blow moulding tool according to claim 1 or 2, **characterized in that** the base half (3a, 3b) and/or the shoulder half (15a, 15b) is also coupled to the respective tool half via at least one drive unit, which causes or assists with the lowering and/or raising action.

4. The blow moulding tool according to any of claims 1 to 3, **characterized in that** angle (α) has a value from 5° to 85°, preferably from about 5° to 45°, for example from 5° to 30°, and/or that angle (β) has a value from 5° to 85°, preferably from about 5° to 60°.

5. The blow moulding tool according to any of claims 1 to 4, **characterized in that** the base half (3a, 3b) is lowered by a lowering dimension (M) of about 5 mm to 20 mm, for example 5 mm to 10 mm as the tool is opened, and/or the shoulder half (15a, 15b) is raised by a raising dimension (M') of about 5 mm to 50 mm as the tool is opened.

6. The blow moulding tool according to any of claims 1 to 5, **characterized in that** the base half (3a, 3b) and/or shoulder half (15a, 15b) is/are fixedly connected to at least one guide element (5, 5') and the tool half is fixedly connected to at least one counter-guide element (6, 6').

7. The blow moulding tool according to any of claims 1 to 6, **characterized in that** the base half (3a, 3b) is fixedly connected to at least one guide rail (5) that is arranged at a predefined angle (α) to first direction (X), and tool half (1a, 1b) is fixedly connected to at least one guide carriage (6) that is mounted on the guide rail (5), or vice versa.

8. The blow moulding tool according to either of claims 6 or 7, **characterized in that** the shoulder half (15a, 15b) is fixedly connected to at least one guide rail (5') that is arranged at a predefined angle (β) to first direction (X), and the tool half (1a, 1b) is fixedly connected to at least one guide carriage (6') that is mounted on the guide rail (5'), or vice versa.

9. The blow moulding tool according to any of claims 1 to 8, **characterized in that** the linear guides (4) are in the form of linear roller guides or linear sliding guides.

10. The blow moulding tool according to any of claims 1 to 9, **characterized in that** at least one spring, for example a threaded compression spring is disposed between the tool half (1 a, 1 b) and the base half (3a, 3b) and/or between the tool half (1a, 1b) and the shoulder half (15a, 15b) and biases the base half (3a, 3b) and/or the shoulder half (15a, 15b) counter to the opening direction (R) as the tool is opened.

11. The blow moulding tool according to claim 10, **characterized in that** the base half (3a, 3b) and/or the shoulder half (15a, 15b) is biased against the force of the spring (10) as the tool is closed, placing the spring (10) under tension.

12. The blow moulding tool according to any of claims 1 to 11, **characterized in that** a pneumatic drive unit operates between the tool half (1a, 1 b) and the base half (3a, 3b) and/or between the tool half (1 a, 1 b) and the shoulder half (15a, 15b).

13. The blow moulding tool according to any of claims 1 to 12, **characterized in that** the travel path (V) of the base half (3a, 3b) or shoulder half (15a, 15b) relative to the tool half (1a, 1b) is limited by end stops (12a, 12b) and is preferably shorter in the horizontal direction than the opening path (W) of the tool half (1a, 1b).

14. The blow moulding tool according to any of claims 1 to 13, wherein each of the tool halves (1a, 1b) is connected to a retaining plate (7), **characterized in that** the base halves (3a, 3b) and/or tool halves (1 a, 1 b) are connected to the retaining plates (7) in displaceable manner.

15. The blow moulding tool according to any of claims 6 to 14, **characterized in that** the guide elements (5, 5') and/or guide elements (6, 6') are fastened to a fastening plate, which is fastened to the tool half (1a, 1b) or the retaining plate (7).

## Revendications

1. Outillage de moulage par soufflage pour la fabrication de corps creux par moulage soufflage, en particulier pour la fabrication de récipients dont les fonds sont bombés vers l'intérieur,
comportant au moins deux moitiés d'outillage (1a, 1b) qui peuvent être rapprochées pour ouvrir et fermer l'outillage dans un sens horizontal (X),
respectivement une moitié de fond (3a, 3b) et/ou moitié d'épaulement (15a, 15b) mobile au moins dans un sens vertical (Y) par rapport à la moitié d'outillage (1a, 1b) étant raccordée à plusieurs ou à chaque moitié d'outillage (1a, 1b),
la moitié de fond (3a, 3b) et/ou moitié d'épaulement (15a, 15b) étant couplée par au moins ou plusieurs guides linéaires (4, 4') disposés obliquement suivant un angle prédéfini (α, β) par rapport au sens horizontal (X) à la moitié d'outillage (1a, 1b) de manière à ce que
la moitié de fond (3a, 3b) ou moitié d'épaulement (15a, 15b), au cours du déplacement de la moitié d'outillage (1a, 1b), soit déplacée le long d'une piste de guidage disposée obliquement suivant un angle prédéfini (α, β) par rapport au sens horizontal (X) et descende et/ou monte dans une mesure prédéfinie (M, M') dans le sens vertical (Y), **caractérisé en ce qu'**un arrêt de la ou des moitiés d'outillage dans le sens horizontal (X) provoque en même temps un arrêt de la ou des moitiés de fond (3a, 3a) et/ou de la ou des moitiés d'épaulement (15a, 15b) dans le sens vertical (Y).

2. Outillage de moulage par soufflage selon la revendication 1, **caractérisé en ce que** la moitié de fond (3a, 3a) et/ou la moitié d'épaulement (15a, 15b) monte et/ou descend automatiquement au cours du déplacement des moitiés d'outillage.

3. Outillage de moulage par soufflage selon la revendication 1 ou 2, **caractérisé en ce que** la moitié de fond (3a, 3b) et/ou la moitié d'épaulement (15a, 15b) est couplée en plus par au moins une commande à la moitié d'outillage respective qui provoque ou assiste la montée et/ou descente.

4. Outillage de moulage par soufflage selon une des revendications 1 à 3, **caractérisé en ce que** l'angle (α) est de 5° à 85°, de préférence environ 5° à 45°, par exemple environ 5° à 30°, et/ou que l'angle (β) est de 5° à 85°, de préférence environ 5° à 60°.

5. Outillage de moulage par soufflage selon une des revendications 1 à 4, **caractérisé en ce que** la moitié de fond (3a, 3b), au cours de l'ouverture de l'outillage, descend à raison d'une distance de descente (M) d'environ 5 mm à 20 mm, par exemple 5 mm à 10 mm, et/ou que la moitié d'épaulement (15a, 15b), au cours de cours de l'ouverture de l'outillage, monte à raison d'une distance de montée (M') d'environ 5 mm à 50 mm.

6. Outillage de moulage par soufflage selon une des revendications 1 à 5, **caractérisé en ce que** la moitié de fond (3a, 3b) ou moitié d'épaulement (15a, 15b) est reliée fixement à au moins un élément de guidage (5, 5') et la moitié d'outillage fixement à au moins un contre-élément de guidage (6, 6').

7. Outillage de moulage par soufflage selon une des revendications 1 à 6, **caractérisé en ce que** la moitié de fond (3a, 3b) est reliée fixement à au moins un rail de guidage (5) disposé obliquement suivant un angle (α) prédéfini par rapport au premier sens (X) et la moitié d'outillage (1 a, 1 b) fixement à au moins un chariot de guidage (6) guidé sur le rail de guidage (5) ou inversement.

8. Outillage de moulage par soufflage selon la revendication 6 ou 7, **caractérisé en ce que** la moitié d'épaulement (15a, 15b) est reliée fixement à au moins un rail de guidage (5') disposé obliquement suivant un angle (β) prédéfini par rapport au premier sens (X) et la moitié d'outillage (1a, 1b) fixement à au moins un chariot de guidage (6') guidé sur le rail de guidage (5') ou inversement.

9. Outillage de moulage par soufflage selon une des revendications 1 à 8, **caractérisé en ce que** les guides linéaires (4) se présentent sous forme de guides linéaires roulants ou de guides linéaires coulissants.

10. Outillage de moulage par soufflage selon une des revendications 1 à 9, **caractérisé en ce que**, entre la moitié d'outillage (1a, 1b) et la moitié de fond (3a, 3b) et/ou entre la moitié d'outillage (1a, 1b) et la moitié d'épaulement (15a, 15b), agit au moins un ressort, par exemple un ressort de compression fileté, qui comprime la moitié de fond (3a, 3b) ou la moitié d'épaulement (15a, 15b) dans le sens inverse du sens d'ouverture (R) au cours de l'ouverture de l'outillage.

11. Outillage de moulage par soufflage selon la revendication 10, **caractérisé en ce que** la moitié de fond (3a, 3a) et/ou la moitié d'épaulement (15a, 15b), au cours de la fermeture de l'outillage, est comprimée à l'inverse de la force du ressort (10) de manière à tendre le ressort (10).

12. Outillage de moulage par soufflage selon une des revendications 1 à 11, **caractérisé en ce que**, entre la moitié d'outillage (1a, 1b) et la moitié de fond (3a, 3b) et/ou entre la moitié d'outillage (1a, 1b) et la moitié d'épaulement (15a, 15b), au moins une commande pneumatique agit.

13. Outillage de moulage par soufflage selon une des revendications 1 à 12, **caractérisé en ce que** la course de réglage (V) de la moitié de fond (3a, 3b) ou de la moitié d'épaulement (15a, 15b) par rapport à la moitié d'outillage (1a, 1b) est limitée par des butées de fin de course (12a, 12b) et est, dans le sens horizontal, de préférence inférieure à la course d'ouverture (W) de la moitié d'outillage (1a, 1b).

14. Outillage de moulage par soufflage selon une des revendications 1 à 13, dans lequel les moitiés d'outillage (1a, 1b) sont raccordées respectivement à une plaque de retenue (7), **caractérisé en ce que** les moitiés de fond (3a, 3b) ou moitiés d'outillage (1a, 1b) sont raccordées de manière mobile aux plaques de retenue (7).

15. Outillage de moulage par soufflage selon une des revendications 6 à 14, **caractérisé en ce que** les éléments de guidage (5, 5') et/ou contreéléments de guidage (6, 6') sont fixés à une plaque de fixation qui est fixée à la moitié d'outillage (1a, 1b) et/ou la plaque de retenue (7).
